# DEMANDE DE BREVET EUROPEEN

(11) **EP 0 907 187 A1**
(43) Date de publication de la demande: **07.04.1999**
(21) Numéro de dépôt: 98401080.1
(22) Date de dépôt: 04.05.1998
(51) Int. Cl.: G21C 9/016, G21C 15/18

(54) **Réacteur nucléaire à eau, dont la cuve contient un dispositif de récupération du coeur après sa fusion accidentelle**

(30) Priorité: 06.05.1997 FR 9705571
(71) Demandeur: COMMISSARIAT A L'ENERGIE ATOMIQUE, 75015 Paris (FR)
(72) Inventeur: Szabo, Imré, 13770 Venelles (FR)
(74) Mandataire: Poulin, Gérard

(57) **Abrégé**

Dans un réacteur nucléaire à eau sous pression ou à eau bouillante, on place directement dans la cuve (18) un réceptacle (30) apte à récupérer le corium, en cas de fusion accidentelle du coeur (20). Un espace de refroidissement (33) est ménagé entre le réceptacle (30) et le fond de la cuve (18). Au moins un premier réservoir (34) permet de remplir la cuve d'eau, par gravité, en cas d'accident. Un deuxième réservoir (40) assure alors le remplissage du puits de cuve (14) en eau de refroidissement. Le réceptacle (30) est traversé par des tubes verticaux fendus et une structure cellulaire est placée entre les tubes. On réalise ainsi un réseau d'obstacles qui évite un contact direct d'une grande masse de corium avec l'eau.

## Description

### Domaine technique

L'invention concerne un réacteur nucléaire à eau sous pression ou à eau bouillante, dont la cuve contient un dispositif destiné à recueillir les débris, solides ou liquides, provenant du coeur du réacteur et à les y confiner, après la fusion accidentelle de ce coeur.

### Etat de la technique

Dans les réacteurs nucléaires à eau sous pression et dans les réacteurs à eau bouillante, le coeur du réacteur est logé dans une cuve en acier. Cette cuve ainsi qu'une partie des autres équipements du réacteur sont placées dans une enceinte de confinement dont la base, appelée "radier", est en béton. Les plus gros composants qui se trouvent à l'intérieur de l'enceinte de confinement sont répartis dans différents compartiments, appelés "casemates". La cuve du réacteur est également logée dans un compartiment, appelé "puits de cuve".

Malgré la très faible probabilité de son occurrence, un accident grave conduisant à la fusion du coeur ne peut être totalement exclu. Un tel accident est imaginable si tous les circuits de refroidissement du coeur du réacteur, y compris ceux prévus en secours, tombaient simultanément en panne pendant une longue période. Dans ce cas hautement improbable, le coeur du réacteur fondrait en quelques heures. La fusion se produirait tout d'abord aux points les plus chauds du coeur, puis elle se propagerait progressivement, principalement vers le bas.

Tant qu'il n'existe aucun moyen d'évacuer totalement la puissance résiduelle du coeur, la masse en fusion, communément appelée "corium", produite par un tel accident, augmente avec le temps. Le corium contient généralement, en plus du combustible nucléaire et du matériau constituant son gainage (généralement du zirconium), les matériaux des barres de contrôle du réacteur et des structures internes à la cuve.

Dans l'hypothèse, très pessimiste, d'une fusion complète du coeur et de toutes les structures internes à la cuve situées à son voisinage immédiat, environ deux heures après le début de l'accident, le corium se composerait (dans le cas d'un réacteur de 1300-1400 MWe de puissance nominale) d'environ 75 tonnes d'acier, 120 tonnes d'UO₂ et 28 tonnes de Zr, une partie de celui-ci étant oxydée pour donner naissance à la zircone ZrO₂. D'autres matériaux tels que de l'argent, de l'indium, du cadmium provenant des barres de contrôle, de l'Inconel (marque déposée) provenant des grilles, etc. seraient également présents, mais en plus faibles quantités. La puissance résiduelle du réacteur serait alors d'environ 40MWₜₕ (puissance thermique), dont les 3/4 resteraient emmagasinés dans la masse en fusion, se répartissant inégalement dans les oxydes (à 90 % environ) et dans les constituants métalliques (10 % environ).

Dans ce contexte, l'effet de barrière du fond de cuve par rapport au corium est généralement considéré comme faible.

Le cheminement du corium à l'intérieur de la cuve dépend en effet de nombreux paramètres et de phénomènes dont certains sont très énergétiques, tels que l'oxydation du zirconium des gaines, et d'autres très violents, tels que l'interaction du corium avec de l'eau, qui peut donner lieu à des explosions dites "explosions de vapeur". L'éventualité de telles explosions est toutefois considérée généralement comme faible.

L'oxydation des gaines et des métaux du coeur peut être incomplète et la partie métallique restante présente en elle-même un danger potentiel important pour le fond de cuve, qu'elle risque de percer par jets ou coulées métalliques. Même en l'absence de jets, l'accumulation des débris solides ou liquides en fond de cuve pourrait donner lieu à des "points chauds". On estime généralement que le fond, non refroidi, de la cuve serait alors vite percé et la masse en fusion s'écoulerait dans le puits de cuve par la brèche initiale dont le diamètre grandirait au fur et à mesure que ses bords fondraient sous l'action des jets ou de l'écoulement du corium. Ce mode de rupture de la cuve est communément appelé "ruine locale" (ou "local failure" dans la terminologie anglo-saxone).

Dans certaines conditions, on estime toutefois que le fond de la cuve du réacteur peut offrir une résistance suffisante pour retenir temporairement la masse de corium, qui pourrait alors occuper totalement le volume de la calotte sphérique et, éventuellement, une partie du corps cylindrique de la cuve, située juste au-dessus de cette calotte. La convection naturelle interne au bain de corium ainsi retenu au fond de la cuve pourrait alors donner lieu à des points chauds en partie haute du bain. Dans le cas d'un bain stratifié, une concentration de flux se produit dans le bain liquide de métaux fondus qui surnagent au-dessus du bain d'oxydes plus lourds et entraîne l'existence d'une zone chaude ("focusing effect" dans la terminologie anglo-saxone). Les points chauds ou la zone chaude pourraient provoquer soit une ablation soit un fluage de la paroi de la cuve sur toute sa circonférence, aux alentours du niveau libre du bain. Le fond rempli de corium se détacherait alors d'un bloc de la cuve. Ce deuxième mode de rupture de la cuve est communément appelé "ruine globale" (ou "gross failure" dans la terminologie anglo-saxone).

Compte tenu de l'état actuel des connaissances sur les accidents graves et sur les moyens de limiter leurs conséquences, la plupart des dispositifs imaginés pour retenir les débris d'un coeur de réacteur à eau, après sa fusion accidentelle, sont placés en dessous de la cuve, dans l'enceinte de confinement. A titre d'exemples, de tels dispositifs sont décrits dans les documents GB-A-2 236 210 et FR-A-2 683 375.

Le développement des dispositifs actuels, conçus pour retenir le corium à l'extérieur de la cuve, découle du fait que les possibilités de retenir le corium dans la cuve ont été considérées jusqu'à présent comme irréalisables. Cependant, du point de vue des conséquences, il serait plus avantageux d'arrêter la progression de la fusion dès les premiers instants de l'accident.

Si la faisabilité de la rétention du corium dans la cuve reste encore à démontrer pour les réacteurs à eau de faible puissance spécifique et, a fortiori, pour les réacteurs de fortes puissances (supérieures à 900 MWe), le caractère irréalisable d'une telle rétention semble actuellement plus contestable.

Ainsi, l'analyse de l'accident du réacteur américain TMI-2 a montré que la masse de corium accumulée dans le fond de la cuve a pu être refroidie par pénétration de l'eau dans l'espace créé par la dilatation différentielle entre le fond de la cuve et la croûte inférieure du corium.

Plus récemment, une étude effectuée sur les réacteurs nucléaires à eau existants a montré que la stratégie de rétention du corium à l'intérieur de la cuve, basée sur le renoyage du puits de cuve, dépend fortement du réacteur étudié mais serait éventuellement faisable dans certains cas.

Enfin, des travaux effectués sur deux réacteurs à eau existants de faible puissance spécifique ont montré que cette stratégie serait applicable.

### Exposé de l'invention

L'invention a précisément pour objet un réacteur nucléaire à eau dont la conception originale lui permet d'assurer, à très long terme, le confinement du corium, après la fusion accidentelle du coeur, à l'intérieur même de la cuve du réacteur, y compris dans le cas d'un réacteur de forte puissance spécifique, pouvant atteindre 1500 MWe.

Conformément à l'invention, ce résultat est obtenu au moyen d'un réacteur nucléaire à eau, comprenant une enceinte de confinement délimitant un puits de cuve, une cuve de réacteur logée dans le puits de cuve et un coeur de réacteur logé dans la cuve, caractérisé par le fait qu'il comprend de plus :
- un réceptacle de récupération du coeur, en cas de fusion de celui-ci, placé dans le fond de la cuve, en dessous du coeur, et séparé de ce fond par un espace de refroidissement ;
- au moins un premier réservoir normalement rempli d'eau de refroidissement, placé dans l'enceinte de confinement et relié à la cuve par une première conduite à écoulement gravitaire, contrôlée par une première vanne, normalement fermée ; et
- au moins un deuxième réservoir normalement rempli d'eau de refroidissement, placé dans l'enceinte de confinement et relié au puits de cuve par une deuxième conduite à écoulement gravitaire contrôlée par une deuxième vanne, normalement fermée.

Du fait qu'un réceptacle de récupération du coeur est prévu dans la cuve, dès la conception du réacteur, l'eau présente dans la cuve peut circuler entre ce réceptacle et le fond de la cuve. Le risque de percement du fond de la cuve est ainsi évité. Le premier réservoir permet de garantir la présence d'eau dans la cuve dès le début de l'accident. Le deuxième réservoir assure ultérieurement le refroidissement de la cuve par l'extérieur. Ce refroidissement apparaît utile dans l'hypothèse d'une défaillance à moyen ou long terme du réceptacle placé dans la cuve. On estime alors que la puissance spécifique du corium aura suffisamment décru pour qu'un refroidissement externe soit suffisant pour retenir le corium en fond de cuve.

Dans une forme de réalisation préférée de l'invention, le réceptacle comprend une paroi en forme de cuvette, des tubes de circulation d'eau pourvus de fentes, faisant saillie vers le haut à partir du fond de la paroi et par lesquels ledit espace communique avec l'intérieur de la paroi du réceptacle, et des structures cellulaires placées entre les tubes.

De préférence, la paroi du réceptacle est réalisée en au moins un matériau réfractaire, chimiquement inerte vis-à-vis du coeur fondu, revêtu d'une enveloppe métallique.

Le matériau réfractaire se présente avantageusement sous la forme d'au moins une couche de briques juxtaposées, pourvues de bords adjacents complémentaires encastrés les uns dans les autres. Ces briques peuvent notamment être réalisées en un matériau céramique à base de zircone et reliées entre elles et à l'enveloppe métallique par des joints en ciment réfractaire.

En variante, le matériau réfractaire peut aussi être du ciment réfractaire.

Selon le cas, le réceptacle peut être réalisé de façon monobloc, ou de façon modulaire.

Dans le premier cas, l'enveloppe métallique comprend une enveloppe extérieure portante, une enveloppe intérieure parallèle à l'enveloppe extérieure, et une bride reliant les bords supérieurs de ces deux enveloppes.

Lorsque le réceptacle est modulaire, il comprend plusieurs secteurs dans chacun desquels l'enveloppe métallique comprend une enveloppe extérieure portante, terminée latéralement par deux bordures rayonnantes renforcées, et une enveloppe intérieure parallèle à l'enveloppe extérieure. Les secteurs sont alors assemblés par des renforts rayonnants sur lesquels sont fixées les bordures rayonnantes renforcées des secteurs adjacents, et par une bride reliant des bords supérieurs des enveloppes intérieure et extérieure de tous les secteurs.

En variante, le réceptacle peut être réalisé totalement en acier inoxydable.

Les tubes de circulation d'eau, qui font saillie vers le haut à partir du fond de la paroi du réceptacle, sont verticaux et ouverts à leur extrémité inférieure, alors que leur extrémité supérieure peut être ouverte ou fermée.

De préférence, chacun des tubes de circulation d'eau est entouré d'un tube de protection, éventuellement percé de trous et équipé extérieurement d'ailettes. Un espace annulaire est alors ménagé entre chaque tube de circulation d'eau et le tube de protection qui l'entoure.

Les structures cellulaires qui sont placés dans le réceptacle, entre les tubes de circulation d'eau, peuvent être constituées soit de grilles horizontales superposées, soit d'un réseau d'alvéoles verticales percées de fenêtres.

Dans le premier cas, les grilles présentent des ouvertures dans lesquelles passent les tubes de circulation d'eau, de telle sorte que ces tubes soient espacés des bords des ouvertures.

Dans le cas où les structures cellulaires comprennent un réseau d'alvéoles verticales, au moins un tube de circulation d'eau est placé dans chaque alvéole.

Des conteneurs remplis d'un produit absorbant les neutrons sont, de préférence, placés dans les structures cellulaires, afin de diminuer les risques de criticité du corium lorsque celui-ci est reçu dans le réceptacle.

Selon le cas, le réceptacle peut être soit suspendu à l'intérieur de la cuve, soit posé dans le fond de celle-ci. Dans le premier cas, une bride supérieure du réceptacle repose sur des butées liées à la cuve. Dans le second cas, le réceptacle comprend des renforts rayonnants munis de perforations, par lesquels il repose dans le fond de la cuve.

Dans une forme de réalisation préférée de l'invention, un collecteur annulaire est monté dans la cuve, à un niveau situé entre le coeur et le réceptacle, au-dessus d'un bord supérieur de la paroi de ce dernier, en ménageant un jeu entre ce collecteur et la paroi de la cuve, une face supérieure du collecteur étant en forme de trémie. Le collecteur est destiné à intercepter les rares chutes de débris et coulées proches de la paroi de la cuve et à les diriger vers l'intérieur du réceptacle, les empêchant ainsi de pénétrer dans l'espace de refroidissement ménagé entre le réceptacle et le fond de la cuve.

Afin de minimiser les perturbations induites par le récupérateur sur la circulation de l'eau dans la cuve en fonctionnement normal, deux plaques perforées, bombées vers le bas et sensiblement parallèles l'une à l'autre, sont fixées respectivement au collecteur, au-dessus du réceptacle, et à la structure supportant le coeur, en dessous de celui-ci.

Avantageusement, le collecteur repose sur le bord supérieur du réceptacle, par l'intermédiaire d'une structure d'entretoisement appropriée.

Dans la forme de réalisation préférée de l'invention, le deuxième réservoir est également relié à la cuve par une troisième conduite à écoulement gravitaire, contrôlée par une troisième vanne normalement fermée.

La troisième conduite débouche alors dans la cuve à un niveau voisin du niveau supérieur du coeur et le deuxième réservoir contient un volume d'eau apte à remplir la cuve et le puits de cuve au moins jusqu'au niveau auquel les première et troisième conduites débouchent dans la cuve.

Dans la forme de réalisation préférée de l'invention, le fond du premier réservoir est à un niveau supérieur à celui des tubulures d'entrée d'eau primaire dans la cuve et la première conduite débouche dans celle-ci à un niveau légèrement inférieur à celui de ces tubulures, de façon à assurer un écoulement gravitaire de l'eau contenue dans le premier réservoir, lors de l'ouverture de la première vanne.

Le premier réservoir contient un volume d'eau apte à remplir la cuve sensiblement jusqu'au niveau supérieur du coeur.

Par ailleurs, le deuxième réservoir, dont le volume est sensiblement plus important que celui du premier réservoir, est situé à un niveau inférieur à celui-ci, ce qui améliore sa protection en cas de séisme.

L'eau de refroidissement est de préférence traitée par des additifs inhibiteurs d'explosion de vapeur, au moins dans le premier réservoir.

Des moyens de drainage sont avantageusement prévus pour réalimenter les premier et deuxième réservoir en eau de refroidissement résultant d'une condensation de vapeur dans l'enceinte de confinement. Pour favoriser cette condensation, des moyens d'échange thermique sont prévus entre une source froide extérieure et la vapeur contenue dans l'enceinte de confinement.

Enfin, des moyens de refroidissement de l'eau de refroidissement sont avantageusement prévus au moins dans le deuxième réservoir.

### Brève description des dessins

On décrira à présent, à titre d'exemples non limitatifs, différentes formes de réalisation de l'invention, en se référant aux dessins annexés dans lesquels :
- la figure 1 est une vue en coupe illustrant de façon schématique un réacteur nucléaire à eau sous pression dont la cuve est équipée en partie basse d'un réceptacle récupérateur interne, conformément à l'invention, le réacteur comprenant de plus des réservoirs aptes à assurer les refroidissements interne et externe de la cuve ;
- la figure 2 est une vue en coupe illustrant à plus grande échelle et plus en détail la partie basse de la cuve du réacteur de la figure 1, dans laquelle est placé le réceptacle récupérateur selon l'invention ;
- la figure 3 est une vue en coupe verticale représentant à plus grande échelle l'un des tubes de circulation d'eau équipant le réceptacle, ainsi que l'alvéole dans laquelle est placé ce tube ;
- la figure 4 est une vue en perspective éclatée, représentant une partie du réceptacle selon une variante de réalisation de type modulaire ;
- la figure 5 est une vue en coupe selon un plan horizontal du réceptacle de la figure 4 ;
- la figure 6 est une vue comparable à la figure 2, illustrant une variante de réalisation selon laquelle le récupérateur est posé dans le fond de la cuve du réacteur ; et
- les figures 7 et 8 sont des vues en coupe comparables à la figure 2, illustrant la récupération du corium à deux instants successifs, en cas d'accident grave impliquant la fusion du coeur.

### Exposé détaillé de formes de réalisations

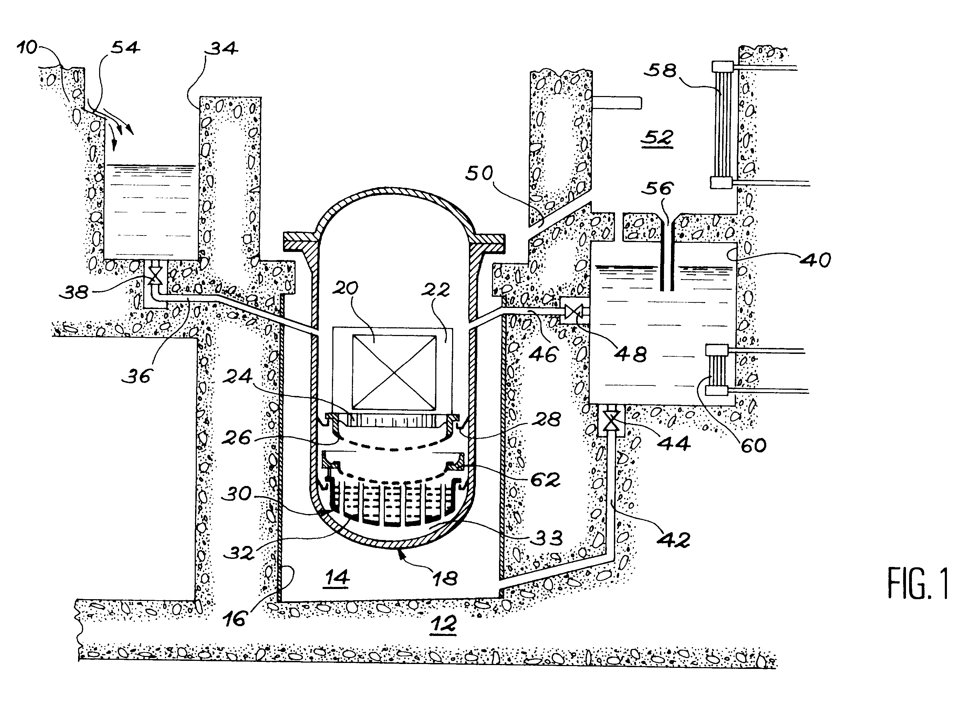

Sur la figure 1, la référence 10 désigne la partie basse d'une enceinte de confinement d'un réacteur nucléaire à eau sous pression. Le radier formant la base de l'enceinte de confinement 10 est désigné par la référence 12.

Dans sa partie basse située immédiatement au-dessus du radier 12, l'enceinte de confinement 10 délimite un puits de cuve 14 dont la paroi est revêtue intérieurement d'une peau d'étanchéité 16.

Le puits de cuve 14 contient la cuve 18 du réacteur, dans laquelle sont placés le coeur 20 du réacteur ainsi qu'un certain nombre d'équipements internes. Pour faciliter la lecture de la figure 1, seule une partie de ces équipements internes a été illustrée de façon schématique.

Ainsi, on reconnaît sur la figure 1 l'enveloppe 22 entourant le coeur, la plaque support 24 sur laquelle reposent le coeur 20 et son enveloppe 22, la plaque perforée 26 de distribution de débit, de préférence bombée vers le bas et fixée à la plaque support 24, en dessous de celle-ci, ainsi que les dispositifs 28 de guidage et de maintien par lesquels les équipements internes de la cuve reposent sur la paroi de celle-ci. En revanche on n'a pas représenté les autres composants qui sont habituellement placés à l'intérieur de la cuve 18 du réacteur, tels que ceux qui permettent de contrôler le fonctionnement du réacteur en marche normale et son arrêt en cas d'accident.

Conformément à l'invention, la cuve 18 du réacteur contient de plus un réceptacle 30 de récupération du coeur 20, en cas de fusion de celui-ci. Plus précisément, ce réceptacle 30 est conçu pour récupérer le corium, c'est-à-dire la masse en fusion qui contient généralement le combustible nucléaire, les matériaux constituant sont gainage, ceux des barres de contrôle du réacteur et ceux des structures internes à la cuve. Ce réceptacle 30 est placé dans la cuve 18, en dessous du coeur 20.

Le réceptacle 30 a pour fonction la collecte de la totalité du corium, dans le cas où un accident grave se traduirait par une fusion complète du coeur 20 du réacteur. Une description détaillée de différentes formes de réalisation de ce réceptacle sera faite ultérieurement. Pour l'essentiel, on retiendra simplement à ce stade de l'exposé que le réceptacle 30 comprend principalement une paroi 32, en forme de cuvette, séparée du fond de la cuve 18 par un espace de refroidissement 33 qui débouche dans la cuve au-dessus de ce réceptacle.

Le réacteur nucléaire conforme à l'invention comprend de plus au moins un premier réservoir 34, placé à l'intérieur de l'enceinte de confinement 10. Ce premier réservoir 34 est normalement rempli d'eau de refroidissement. Plus précisément, le volume du réservoir 34 (ou le volume cumulé des réservoirs 34 lorsque plusieurs réservoirs sont prévus) est calculé afin de pouvoir remplir la cuve 18 jusqu'à un niveau sensiblement égal au niveau supérieur du coeur 20.

Chaque réservoir 34 est relié à la cuve 18 par une première conduite 36 à écoulement gravitaire, contrôlée par une vanne 38, normalement fermée lorsque le réacteur est en fonctionnement normal.

Plus précisément, la conduite 36 à écoulement gravitaire relie le fond du réservoir 34 à la cuve 18, en débouchant dans celle-ci à un niveau légèrement inférieur à celui des tubulures (non représentées) d'entrée et de sortie d'eau primaire dans la cuve 18 du réacteur. Par ailleurs, le fond du réservoir 34 se trouve à un niveau supérieur à celui de ces tubulures. Par conséquent, l'eau contenue dans le réservoir 34 s'écoule par gravité dans la cuve 18, lors de l'ouverture de la vanne 38.

Le réacteur nucléaire selon l'invention comprend de plus au moins un deuxième réservoir 40, également placé dans l'enceinte de confinement 10. Le deuxième réservoir 40 (ou les deuxièmes réservoirs 40) contient un volume d'eau cumulé suffisant pour pouvoir remplir la cuve 18 et le puits de cuve 14 au moins jusqu'au niveau auquel la première conduite 36 débouche dans la cuve 10. A cet effet, le fond du deuxième réservoir 40 communique avec le fond du puits de cuve 14 par une deuxième conduite 42 à écoulement gravitaire, contrôlée par une deuxième vanne 44, normalement fermée lorsque le réacteur est en fonctionnement normal. Chaque deuxième réservoir 40 communique également avec la cuve 18 par une troisième conduite 46 à écoulement gravitaire, contrôlée par une troisième vanne 48, normalement fermée lorsque le réacteur est en fonctionnement normal.

La troisième conduite 46 débouche dans le deuxième réservoir 40 à un niveau tel que le volume d'eau contenu dans le réservoir 40 et susceptible de s'écouler par gravité dans la cuve 16 est suffisant pour remplir la cuve 18 sensiblement jusqu'au niveau supérieur du coeur 20. A cet effet, la troisième conduite 46 débouche dans la cuve 18 sensiblement au même niveau que la première conduite 36.

L'agencement qui vient d'être décrit permet de placer le deuxième réservoir 40 à un niveau inférieur à celui du premier réservoir 34. Etant donné que le volume d'eau contenu dans le deuxième réservoir 40 est sensiblement plus important que celui qui est reçu dans le premier réservoir 34, le niveau relativement bas du deuxième réservoir à l'intérieur de l'enceinte de confinement 10 lui assure une position plus favorable, en cas de séisme.

L'eau de refroidissement contenue dans le premier réservoir 34 est de l'eau à température ambiante dont certaines propriétés (tension superficielle, viscosité, etc.) ont été modifiées par des additifs spécifiques, en faibles quantités, permettant de limiter le risque d'explosion de vapeur lors de l'injection de l'eau dans la cuve 18. Ces additifs peuvent notamment être des surfactants et des polymères d'oxydes de polyéthylène.

L'eau de refroidissement contenue dans le deuxième réservoir 40 est aussi, de préférence, de l'eau à température ambiante, traitée par des additifs inhibiteurs d'explosion de vapeur. Toutefois, ces additifs peuvent éventuellement être supprimés, du fait que l'injection gravitaire faite depuis le deuxième réservoir 40 dans la cuve 18 s'effectue normalement après l'écoulement gravitaire de l'eau de refroidissement contenue dans le réservoir 34, de sorte que la température du corium a été abaissée et que la probabilité d'explosion de vapeur est moins grande.

Pour compléter la description d'ensemble du réacteur faite en référence à la figure 1, on observe que des ouvertures 50 sont pratiquées dans les parois du puits de cuve 14, à un niveau proche de celui du dôme supérieur de la cuve 18. Ces ouvertures 50 font communiquer le puits de cuve 14 avec des compartiments 52 voisins, délimités dans l'enceinte de confinement 10. Ces compartiments 52 peuvent notamment être des compartiments dans lesquels sont reçus certains gros composants (non représentés) du circuit primaire du réacteur, tels que les pompes et les générateurs de vapeur. Les ouvertures 50 permettent d'éviter une montée excessive de la pression dans le puits de cuve 14 en assurant l'évacuation des gaz et de la vapeur produite dans celui-ci, dans des conditions accidentelles.

Comme on l'a illustré schématiquement en 54 et 56 sur la figure 1, des moyens de drainage sont aménagés dans les compartiments délimités par l'enceinte de confinement 10 au-dessus des réservoirs 34 et 40, afin d'assurer une réalimentation automatique de ces réservoirs en eau liquide de refroidissement résultant de la condensation de la vapeur dans l'enceinte 10. Afin d'assurer cette condensation de la vapeur dans l'enceinte 10, des moyens d'échange thermiques 58 sont prévus entre une source froide (non représentée) extérieure à l'enceinte et la vapeur contenue dans l'enceinte de confinement 10. Ces moyens d'échange thermique 58 transfèrent, de préférence de manière passive, la chaleur de l'enceinte 10 à la source froide extérieure.

Enfin, pour assurer le refroidissement à long terme de l'eau de refroidissement contenue notamment dans le deuxième réservoir 40, des moyens de refroidissement 60, tels que des échangeurs immergés dans l'eau de refroidissement contenue dans ce réservoir, permettent d'évacuer la puissance hors de l'enceinte.

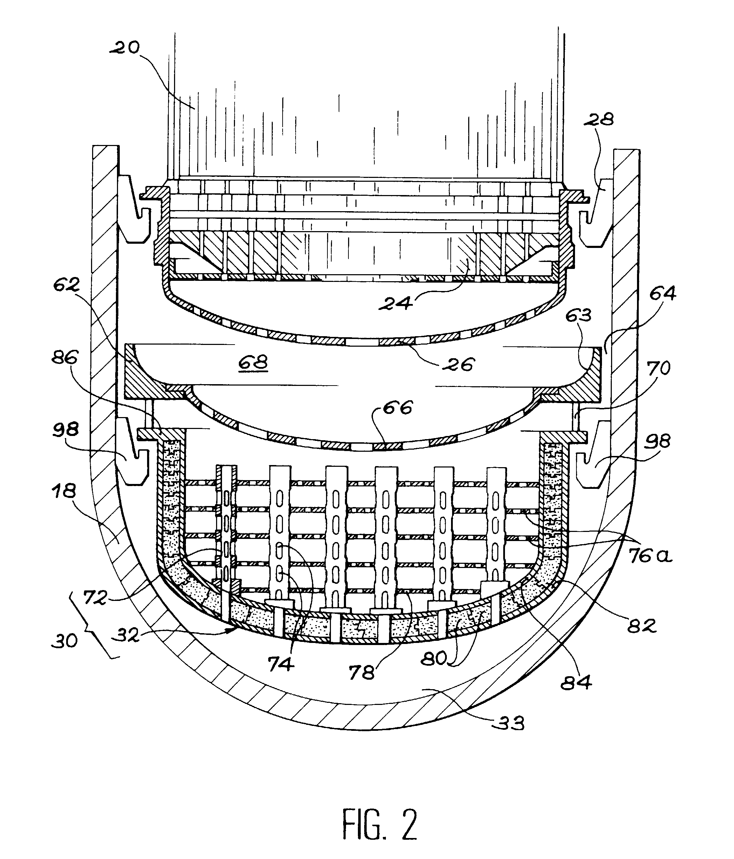

Comme l'illustrent les figures 1 et 2, en plus du réceptacle 30, un collecteur annulaire 62, par exemple en acier inoxydable, est monté dans la cuve 18, à un niveau situé entre le coeur 20 du réacteur et le réceptacle 30. Plus précisément, le collecteur annulaire 62 est placé au-dessus du bord supérieur de la paroi 32 de ce réceptacle, de façon telle qu'un jeu limité 64 (de quelques cm) soit prévu entre le collecteur 62 et la paroi de la cuve 18. Le dimensionnement de ce jeu 64 tient compte de la dilatation différentielle entre le collecteur et la cuve. De plus, il permet de dériver une fraction du débit nominal de l'eau vers l'espace de refroidissement 33 prévu entre le réceptacle 30 et le fond de la cuve 18, lorsque le réacteur est en fonctionnement normal.

Le collecteur annulaire 62 est destiné à intercepter les rares chutes de débris et les coulées qui se produisent à proximité de la paroi de la cuve 18, et à les diriger vers l'intérieur du réceptacle 30, en les empêchant de pénétrer dans l'espace de refroidissement 33 ménagé entre le fond du réceptacle et le fond de la cuve. A cet effet, la face supérieure 63 (figure 2) du collecteur 62 présente approximativement la forme d'une trémie incurvée vers l'intérieur.

Une plaque inférieure perforée 66, bombée vers le bas est fixée au centre du collecteur annulaire 62, de façon à ménager entre les plaques 26 et 66 un espace 68 propre à assurer l'écoulement normal de l'eau en convection forcée, lors du fonctionnement normal du réacteur. En d'autres termes, la plaque inférieure 66 vise à reconstituer approximativement la géométrie du fond de la cuve d'un réacteur nucléaire traditionnel dépourvu de moyens de récupération intégrés à la cuve. Comme la plaque inférieure perforée 26, la plaque perforée 66 est relativement mince et réalisée en acier inoxydable.

Comme on l'a illustré schématiquement sur la figure 2, le collecteur 62 repose sur le bord supérieur de la paroi 32 du réceptacle 30 par l'intermédiaire d'une structure d'entretoisement 70 telle qu'une virole ou tout autre support.

La paroi 32 du réceptacle présente la forme d'une cuvette. Elle se compose d'un fond bombé vers le bas (de forme sensiblement hémisphérique, ellipsoïdique, en cône renversé, ou autre), prolongé vers le haut par une partie latérale sensiblement cylindrique. La hauteur de la partie latérale de la paroi 32 est calculée afin de dépasser le niveau libre de remplissage d'un corium qui résulterait de la fusion de 100 % des matériaux du coeur 20, de la plaque support 24 du coeur et des structures internes au réceptacle 30 proprement dit, qui vont à présent être décrites.

Le réceptacle 30 comprend une pluralité de tubes 72 de circulation d'eau, qui traversent le fond bombé de la paroi 32 et font saillie verticalement vers le haut jusqu'à un niveau légèrement inférieur à celui du bord supérieur de cette paroi. Les tubes 72 débouchent par leurs extrémités inférieures dans l'espace de refroidissement 33 ménagé entre le fond du réceptacle 30 et le fond de la cuve 18. Ils débouchent également à l'intérieur du de la paroi 30 en forme de cuvette par des fentes 74 ménagées sur toute leur hauteur. Selon le cas, les tubes 72 de circulation d'eau peuvent être fermés à leur extrémité haute ou ouverts, comme l'illustre la figure 2.

Conjointement avec le jeu 64 et avec les perforations de la plaque inférieure 66, les tubes 72 de circulation d'eau permettent, lorsque le réacteur est en fonctionnement normal, l'écoulement d'un léger débit d'eau vers le bas par le jeu 64, puis vers le haut à travers les tubes 72 et la plaque 66. Cet écoulement doit être suffisant pour empêcher des dépôts dans le fond du réceptacle 30. Il peut être aménagé d'une manière similaire à celle qui existe actuellement dans les structures internes supérieures de la cuve des réacteurs à eau sous pression.

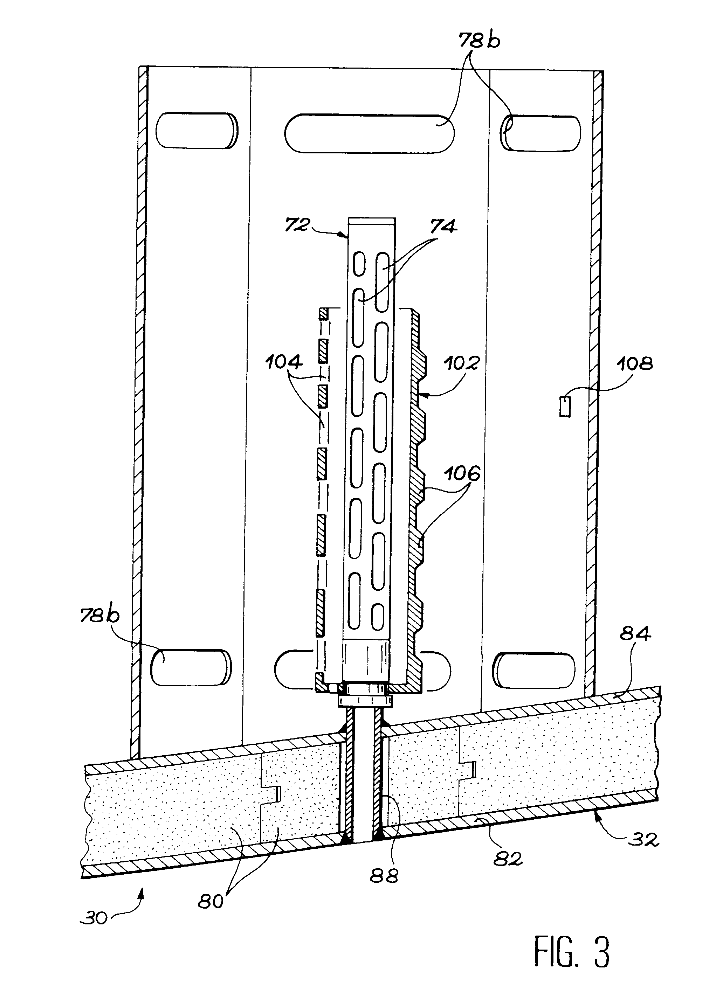

Comme on l'a illustré schématiquement sur la figure 3, chacun des tubes 72 de circulation d'eau est entouré d'un tube de protection 102, de façon telle qu'un espace annulaire soit délimité entre ces deux tubes. Comme les tubes de circulation d'eau 72, les tubes de protection 102 sont percés de trous 104. Ils peuvent aussi être équipés extérieurement d'ailettes 106 destinées à favoriser les échanges thermiques.

Pour compléter la description du réceptacle 30, des structures cellulaires sont placées entre la paroi 32 et les tubes 72 de circulation d'eau. Dans la forme de réalisation illustrée schématiquement sur la figure 2, ces structures cellulaires sont constituées par un certain nombre de grilles horizontales superposées 76a, disposées à égale distance les unes des autres. Ces grilles 76a présentent des ouvertures 78a, qui permettent le passage, avec un jeu relativement important, des tubes 72.

En cas de fusion accidentelle du coeur 20 du réacteur, les structures cellulaires, constituées dans ce cas par les grilles 76, agissent conjointement avec les tubes fendus 72, pour constituer un réseau d'obstacles destiné à éviter un contact direct d'une grande masse de corium avec toute la masse d'eau contenue à l'intérieur du réceptacle. En effet, dans certaines conditions, un tel contact pourrait donner lieu à une explosion de vapeur suffisamment énergétique pour endommager ou détruire le réceptacle. Les tubes 72 de circulation d'eau et les structures cellulaires constitués ici par les grilles 76 divisent les coulées de corium en les ramifiant ou en les fragmentant en des masses relativement faibles. De cette manière, on réduit les possibilités de mélange du corium avec l'eau dans des conditions qui seraient favorables à une explosion de vapeur. De même, les possibilités de propagation de l'interaction corium/eau sont plus réduites au sein du réseau d'obstacles ainsi constitué.

Afin de remplir efficacement cette fonction et à titre d'illustration, l'espacement entre les axes des tubes 72 voisins peut être de l'ordre de 20 à 30 cm, de même que l'espacement entre deux grilles 76 superposées.

Il est à noter que les ouvertures 78 pratiquées dans les grilles 76 peuvent prendre des formes très variées pour assurer la fonction requise. Ainsi, chacune des ouvertures 78 peut être selon le cas circulaire, triangulaire, carrée, hexagonale, octogonale, etc.. Chacune des ouvertures 78 est traversée par au moins un tube 72.

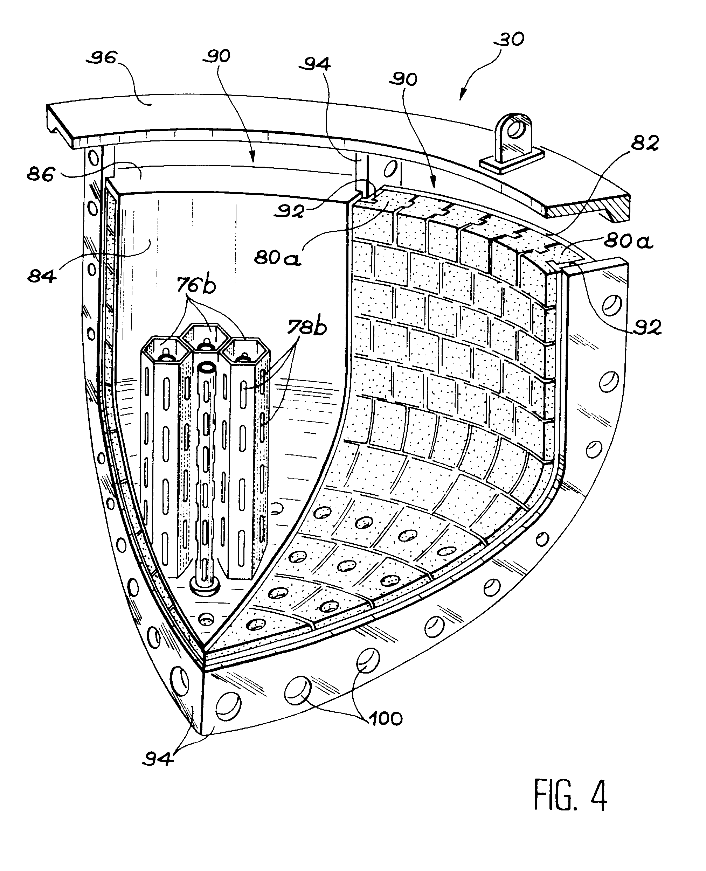

Dans une variante de réalisation illustrée notamment sur les figures 3 et 4, au lieu d'être constituées par des grilles horizontales superposées 76a, les structures cellulaires qui sont interposées entre les tubes 72 et la paroi 32, à l'intérieur du réceptacle 30 peuvent aussi être formées par un réseau d'alvéoles 76b, constituées par des tubes verticaux percés de fenêtres 78b. Ces alvéoles 76b sont disposées de manière à former un réseau régulier et contiennent chacune au moins l'un des tubes 72 de circulation d'eau. Comme les ouvertures 78a pratiquées dans les grilles 76a, les alvéoles 76b peuvent présenter en section horizontale des formes diverses telles que des formes circulaires, triangulaires, carrées, hexagonales, octogonales, etc..

Il est à noter, en outre, que les structures cellulaires que forment les grilles 76a ou les alvéoles 76b contiennent avantageusement des conteneurs 108 (figure 3) remplis d'un produit absorbant les neutrons. Cette caractéristique permet de diminuer les risques de criticité du corium lorsqu'il est reçu dans le réceptacle 30.

Dans la forme de réalisation préférée de l'invention illustrée notamment sur la figure 2, la paroi 32 du réceptacle 30 contient au moins un matériau réfractaire et chimiquement inerte vis-à-vis du corium, revêtu d'une enveloppe métallique réalisée de préférence dans le même acier inoxydable que celui des autres structures internes de la cuve 18. Cette enveloppe permet de protéger le matériau réfractaire des actions corrosives de l'eau du circuit primaire du réacteur.

De façon plus précise, le matériau réfractaire se présente de préférence sous la forme d'au moins une couche de briques 80 juxtaposées. Ces briques présentent des bords adjacents complémentaires (par exemple en U ou en queue d'aronde), encastrés les uns dans les autres de façon à permettre leur maintien relatif en position, notamment lors de la fabrication du réceptacle. Les briques 80 peuvent notamment être réalisées en un matériau céramique à base de zircone. Ce matériau est choisi de préférence en raison de sa haute température de fusion, de sa compatibilité chimique relativement bonne avec le corium et de sa grande disponibilité sur le marché industriel. Les briques 80 ont des dimensions de l'ordre de quelques dizaines de centimètres (20 à 30 cm) et des épaisseurs de quelques centimètres. Elles peuvent présenter différentes formes (carrées, rectangulaires, hexagonales, etc.).

Un jeu est laissé entre les briques adjacentes, ainsi qu'entre les briques et les enveloppes métalliques, afin d'éviter des contraintes mécaniques excessives dues aux dilatations (à la température maximale de 2500°C). Des joints en ciment réfractaire sont coulés dans ces jeux.

L'épaisseur des briques réfractaires 80 est déterminée de manière à supporter les contraintes thermo-mécaniques, c'est-à-dire, à résister d'une part à l'ablation du corium et à supporter d'autre part le gradient thermique existant entre le corium et l'eau refroidissant l'enveloppe extérieure métallique du réceptacle.

L'enveloppe métallique de la paroi 32 du réceptacle 30 comprend une enveloppe extérieure 82 portante, une enveloppe intérieure 84, plus mince que l'enveloppe extérieure portante 82, et une bride 86 reliant les bords supérieurs des enveloppes 82 et 84. L'enveloppe métallique de la paroi 32 est réalisée dans le même acier inoxydable que les autres structures internes de la cuve 18.

Dans la forme de réalisation illustrée schématiquement sur la figure 2, le réceptacle 30 est monobloc, c'est-à-dire qu'il est réalisé d'un seul tenant. Dans ce cas, l'enveloppe métallique extérieure 82 est dimensionnée de manière à assurer la tenue mécanique de l'ensemble, notamment lors des opérations de transport et de mise en place. A titre d'illustration, son épaisseur peut être d'environ 3 à 5 cm.

Pour effectuer le montage du réceptacle 30 lorsqu'il est réalisé de façon monobloc, on dispose la couche de briques réfractaires 80 sur l'enveloppe extérieure 82, en prenant soin de remplir les joints de ciment réfractaire. La mise en place des briques 80 se fait, par exemple, du fond vers le bord supérieur de la paroi latérale. L'enveloppe intérieure 84 est ensuite placée au-dessus de la couche de briques réfractaires 80 et fixée à l'enveloppe extérieure 82 au moyen de la bride 86.

Aux emplacements prévus pour le passage des tubes 72, des trous sont formés dans les enveloppes 82 et 84 ainsi que dans les briques réfractaires 80. Des tubes de traversée 88 (figure 3) sont mis en place dans ces trous et soudés sur les enveloppes 82 et 84. On effectue ensuite le remplissage des vides résiduels au moyen de ciment et de liant réfractaires, de façon à combler ces vides.

L'ensemble ainsi obtenu est placé dans un berceau de transport, qui permet de l'acheminer jusqu'au site du réacteur et de le mettre en place dans la cuve 18.

On fixe 'alors les tubes 72 dans le prolongement des tubes de traversée 88 et on met en place les structures cellulaires constituées par les grilles 76a ou par les alvéoles 76b. Ces deux dernières opérations peuvent aussi s'effectuer avant le transport de l'ensemble sur le site du réacteur.

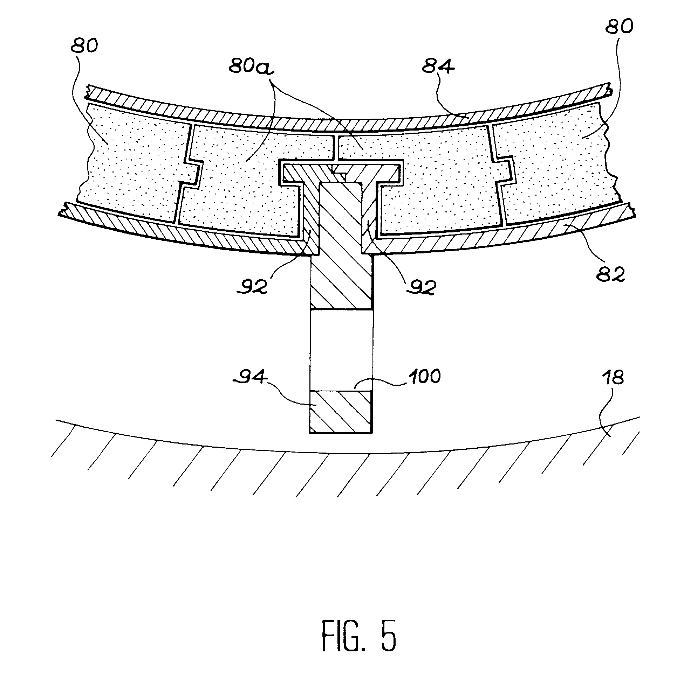

Selon une forme de réalisation préférentielle illustrée notamment sur les figures 4 et 5, le réceptacle 30 présente une structure modulaire qui facilite son transport et son assemblage sur le site du réacteur.

Le réceptacle 30 se compose alors d'un certain nombre de secteurs 90 (en nombre limité) montés en usine.

Dans chacun des secteurs 90, l'enveloppe métallique du réceptacle 30 comprend, comme précédemment, une enveloppe métallique extérieure portante 82, une enveloppe intérieure 84 parallèle à l'enveloppe extérieure 82, et une bride 86 reliant les bords supérieurs des enveloppes 82 et 84.

Comme le montrent les figures 4 et 5, l'enveloppe extérieure 82 de chaque secteur 90 est terminée latéralement par deux bordures rayonnantes renforcées 92, qui font saillie radialement vers l'intérieur du réceptacle et présentent approximativement en section la forme d'un T. Les briques réfractaires 80a qui sont prévues pour venir au contact de ces bordures rayonnantes renforcées 92 présentent des formes complémentaires de celles-ci (figure 5), afin que les briques d'un secteur 90 donné soient maintenues latéralement en place sur l'enveloppe extérieure 82. Chacun des secteurs 90 est fabriqué sensiblement de la même manière que l'ensemble du réceptacle 30 lorsque celui-ci est monobloc. Ainsi, les briques 80 et 80a sont d'abord mises en place et scellées sur l'enveloppe extérieure 82, puis elles sont recouvertes par l'enveloppe intérieure 84 et la bride 86 est mis en place.

Les tubes de traversée 88 (figure 3) sont ensuite soudés dans les trous prévus à cet effet dans les enveloppes 82, 84 et dans les briques 80, puis les tubes 72 ainsi que les structures cellulaires 76a ou 76b sont mis en place dans chacun des secteurs 90.

Les secteurs sont ensuite assemblés sur le site du réacteur, au moyen de renforts rayonnants 94, sur lesquels sont fixées les bordures rayonnantes renforcées 92 des secteurs 90 adjacents. La fixation peut notamment se faire par soudage.

Pour terminer l'assemblage, une bride 96 en forme de couronne est fixée sur les bords supérieurs des renforts rayonnants 94.

Comme on l'a illustré sur la figure 2, le réceptacle 30 peut être suspendu dans la cuve 18. Dans ce cas, la fixation s'effectue au moyen de la bride 86 ou 96, selon le mode de réalisation du réceptacle. Plus précisément, la bride présente alors une partie extérieure en saillie qui vient reposer sur des supports 98 prévus à cet effet à l'intérieur de la cuve 18.

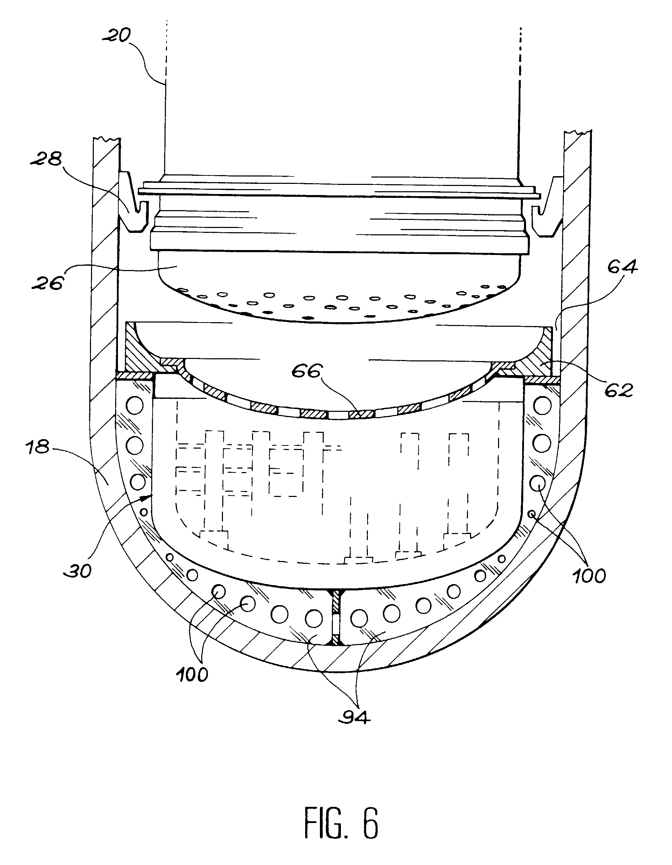

Comme on l'a illustré schématiquement sur la figure 6, le réceptacle 30 peut aussi reposer dans le fond de la cuve 18 par l'intermédiaire des renforts rayonnants 94, lorsqu'il est formé de secteurs assemblés comme on l'a décrit précédemment en se référant aux figures 4 et 5. Les renforts rayonnants 94 sont alors munis de perforations 100 qui rendent possible la circulation de l'eau de refroidissement dans l'espace 33 intermédiaire entre le réceptacle et le fond de la cuve 18.

Dans une variante de réalisation non représentée, le réceptacle 30 est réalisé totalement en acier inoxydable et ne contient aucun matériau réfractaire. Le réceptacle 30 se comporte alors comme un creuset du fait qu'une croûte de corium vient se former et tapisser intérieurement sa paroi.

Dans une autre variante de réalisation non représentée, les briques réfractaires 80 sont remplacées par du ciment réfractaire injecté à moyenne ou haute pression entre les enveloppes intérieure 82 et extérieure 84 du réceptacle.

Dans l'hypothèse où les moyens de sauvegarde associés au réacteur ne permettent pas de refroidir le coeur 20, soit parce qu'ils sont indisponibles, soit parce qu'ils sont insuffisants pour assurer le renoyage et le refroidissement du coeur, celui-ci commence à fondre. Un système à alimentation électrique de secours autonome (non représenté) fournit alors un signal de détection de la fusion du coeur. Ce signal est immédiatement transmis aux vannes 38 et 44 afin d'en commander l'ouverture. Cette ouverture est assurée de façon automatique par le système à alimentation électrique autonome.

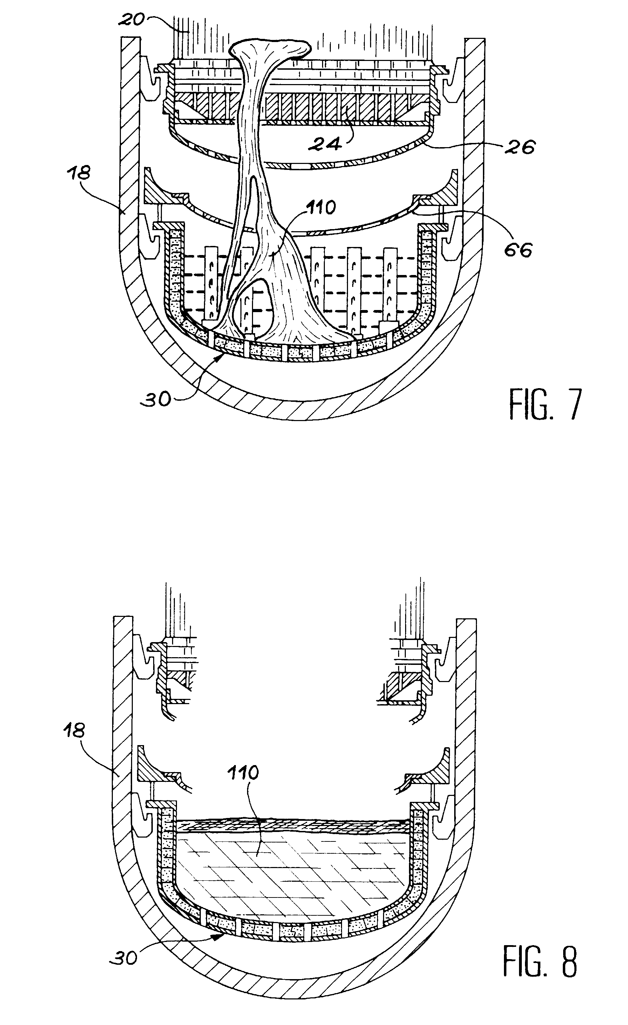

Comme l'illustre la figure 7, l'eau contenue dans le premier réservoir 34 pénètre alors par gravité dans la cuve 18 (dépressurisation du circuit primaire jusqu'à la pression de l'enceinte) et celle, contenue dans le deuxième réservoir 40 dans le puits de cuve 14, par la conduite 42.

Quand le premier réservoir 34 est presque vide, un signal de détection de niveau bas est transmis à la vanne 48 dont l'ouverture (autonome) permet à l'eau du deuxième réservoir 40 de pénétrer à son tour dans la cuve (le réservoir 40 prenant ainsi le relais du réservoir 34) Le volume du réservoir 40 est déterminé de manière à pouvoir remplir la cuve et le puits de cuve au moins jusqu'au niveau des tubulures par lesquelles les conduites 36 et 46 débouchent dans la cuve 18.

Le premier réservoir 34, dont le bas est à une élévation supérieure à celle des branches chaudes et froides du circuit primaire, constitue ainsi un système d'injection gravitaire dont le fonctionnement est limité à la phase précoce de la fusion du coeur. Il permet éventuellement de renoyer le coeur dégradé et de stopper la progression du corium vers le fond de cuve. Sa capacité en eau "spéciale" (avec additifs inhibiteurs d'explosion de vapeur) est relativement limitée, ce qui permet de contrôler cette eau à moindre coût. Etant donné son volume relativement faible (quelques centaines de m³), il peut être placé en hauteur sans poser de problèmes sérieux de tenue aux séismes.

Le deuxième réservoir 40 intervient dans une phase plus tardive et permet un refroidissement à long terme, il a une grande capacité et on a intérêt à le placer en partie basse de l'enceinte (séisme). Il est possible qu'on n'ait pas besoin d'additifs dans l'eau stockée dans ce deuxième réservoir. On peut supposer, en effet, que l'action de l'injection gravitaire à partir du premier réservoir a abaissé la température du corium et que la probabilité d'explosion de vapeur est moins grande au moment de l'injection.

Dans la description précédente du fonctionnement, on a déclenché le renoyage du puits de cuve dès le début de la fusion du coeur en prenant en compte le temps nécessaire au remplissage du puits de cuve. En effet, le puits de cuve doit être rempli avant l'arrivée du corium dans le réceptacle interne. Le refroidissement interne à la cuve 18 est réalisé par circulation de l'eau de l'espace 33 vers les tubes 72 dont certains auraient été détruits partiellement ou totalement. Dans la première phase, l'injection de l'eau facilite la formation d'un lit de débris. Au fur et à mesure que le corium s'accumule on peut avoir par endroit une re-fusion des débris accumulés précédemment. Dans la phase finale, un bain de corium peut se former à l'intérieur du réceptacle et fondre la quasi-totalité du réseau d'obstacles.

En maintenant la température du fond de cuve à une valeur basse, le refroidissement externe constitue un puits de chaleur favorisant l'accumulation de l'eau liquide en paroi interne à l'intérieur de l'espace 33. Par ailleurs, le risque de rupture par d'éventuels points chauds qui peuvent résulter ici d'une coulée de corium dans l'espace 33 (brèche dans le réceptacle 30) est minimisé par le maintien de la température moyenne du fond de cuve à une valeur très basse. Dans l'hypothèse très pessimiste où le réceptacle 30 ne résisterait pas indéfiniment, il retarderait le contact du corium avec le fond de cuve. Ce retard est suffisant pour que le refroidissement externe soit à lui seul suffisant pour maintenir le corium en cuve (décroissance de puissance spécifique du corium pendant le délai de grâce fourni par la résistance même temporaire du réceptacle).

La figure 7 représente une situation transitoire où le corium 110 pénètre dans le réceptacle et la figure 8 la situation finale où le bain de corium 110 formé dans le réceptacle 30 a pu être refroidi.

En cas d'accident grave conduisant à la fusion du coeur 20 du réacteur, l'agencement proposé conformément à l'invention permet donc bien de recueillir la totalité du corium dans le réceptacle 30 et de préserver l'intégrité de la paroi 32 de ce dernier, notamment grâce au refroidissement intérieur de la cuve 18 assuré par le premier réservoir 34 et, par le deuxième réservoir 40. Cette intégrité est également assurée par le refroidissement extérieur de la cuve 18 par le deuxième réservoir 40.

Il est à noter que la réception du corium dans le réceptacle 30 se traduit à terme par la destruction de la plupart des tubes et des structures cellulaires contenus dans le réceptacle. La circulation de l'eau de refroidissement dans la cuve se fait alors essentiellement dans l'espace de refroidissement 33 situé autour et en dessous du réceptacle. Pour éviter un écoulement de corium dans cet espace, le diamètre des tubes de traversée 88 (figure 3) de la paroi du réceptacle est choisi relativement petit (quelques cm) de manière à geler le corium en cet endroit.

Bien entendu, un certain nombre de modifications sont possibles, sans sortir du cadre de l'invention. En particulier, l'injection de l'eau de refroidissement en provenance des réservoirs 34 et 40 vers la cuve 18 peut s'effectuer directement dans les branches chaudes ou froides qui débouchent dans la cuve du réacteur ou dans le plénum supérieur de celle-ci, ou encore simultanément en plusieurs endroits. Par ailleurs, le dimensionnement des réservoirs 34 et 40 peut être conçu de façon à noyer tous les compartiments inférieurs de l'enceinte de confinement 10, jusqu'au niveau des branches chaudes et froides du circuit primaire.

## Revendications

1. Réacteur nucléaire à eau, comprenant une enceinte de confinement (10) délimitant un puits de cuve (16), une cuve (18) de réacteur logée dans le puits de cuve (16) et un coeur (20) de réacteur logé dans la cuve (18), caractérisé par le fait qu'il comprend de plus :
- un réceptacle (30) de récupération du coeur, en cas de fusion de celui-ci, placé dans le fond de la cuve (18), en dessous du coeur (20), et séparé de ce fond par un espace (33) de refroidissement ;
- au moins un premier réservoir (34) normalement rempli d'eau de refroidissement, placé dans l'enceinte de confinement (10) et relié à la cuve (18) par une première conduite (36) à écoulement gravitaire, contrôlée par une première vanne (38), normalement fermée ; et
- au moins un deuxième réservoir (40) normalement rempli d'eau de refroidissement, placé dans l'enceinte de confinement (10) et relié au puits de cuve (14) par une deuxième conduite (42) à écoulement gravitaire contrôlée par une deuxième vanne (44), normalement fermée.

2. Réacteur selon la revendication 1, dans lequel le réceptacle (30) comprend une paroi (30) en forme de cuvette, des tubes (72) de circulation d'eau pourvus de fentes (74), faisant saillie vers le haut à partir du fond de la paroi et par lesquels ledit espace (33) communique avec l'intérieur de la paroi du réceptacle (30), et des structures cellulaires (76a,76b) placées entre les tubes (72).

3. Réacteur selon la revendication 2, dans lequel le réceptacle (30) est réalisée en au moins un matériau réfractaire, chimiquement inerte vis-à-vis du coeur fondu, revêtu d'une enveloppe métallique (82,84).

4. Réacteur selon la revendication 3, dans lequel le matériau réfractaire se présente sous la forme d'au moins une couche de briques (80) juxtaposées, présentant des bords adjacents complémentaires, encastrés les uns dans les autres.

5. Réacteur selon la revendication 4, dans lequel les briques (80) sont réalisées en un matériau céramique à base de zircone et reliées entre elles et à l'enveloppe métallique (82,84) par des joints en ciment réfractaire.

6. Réacteur selon la revendication 3, dans lequel le matériau réfractaire est du ciment réfractaire.

7. Réacteur selon l'une quelconque des revendications 3 à 6, dans lequel le réceptacle (30) est monobloc, l'enveloppe métallique comprenant une enveloppe extérieure (82) portante, une enveloppe intérieure (84) parallèle à l'enveloppe extérieure, et une bride (86) reliant les bords supérieurs des deux enveloppes intérieure et extérieure.

8. Réacteur selon l'une quelconque des revendications 3 à 6, dans lequel le réceptacle (30) comprend plusieurs secteurs (90) dans chacun desquels l'enveloppe métallique comprend une enveloppe extérieure (82) portante, terminée latéralement par deux bordures rayonnantes renforcées (92), et une enveloppe intérieure (84) parallèle à l'enveloppe extérieure, lesdits secteurs (90) étant assemblés par des renforts rayonnants (94) sur lesquels sont fixées les bordures rayonnantes renforcées (92) des secteurs adjacents, et par une bride (96) reliant des bords supérieurs des enveloppes intérieure et extérieure de tous les secteurs.

9. Réacteur selon la revendication 2, dans lequel le réceptacle (30) est totalement en acier inoxydable.

10. Réacteur selon l'une quelconque des revendications 2 à 9, dans lequel les tubes (72) de circulation d'eau sont verticaux et ouverts à leurs deux extrémités.

11. Réacteur selon l'une quelconque des revendications 2 à 9, dans lequel les tubes (72) de circulation d'eau sont verticaux et fermés à leur extrémité haute.

12. Réacteur selon l'une quelconque des revendications 2 à 11, dans lequel chacun des tubes (72) de circulation d'eau est entouré d'un tube de protection (102), de façon à délimiter entre eux un espace annulaire.

13. Réacteur selon la revendication 12, dans lequel les tubes de protection (102) sont percés de trous (104).

14. Réacteur selon l'une quelconque des revendications 12 et 13, dans lequel les tubes de protection sont équipés extérieurement d'ailettes (106).

15. Réacteur selon l'une quelconque des revendications 2 à 14, dans lequel les structures cellulaires comprennent des grilles horizontales superposées (76a), présentant des ouvertures (78) dans lesquelles passent les tubes (72) de circulation d'eau, de telle sorte que les tubes soient espacés des bords des ouvertures.

16. Réacteur selon l'une quelconque des revendications 2 à 14, dans lequel les structures cellulaires comprennent un réseau d'alvéoles verticales (76b), percées de fenêtres (78b), au moins un tube (72) de circulation d'eau étant placé dans chaque alvéole.

17. Réacteur selon l'une quelconque des revendications 2 à 16, dans lequel des conteneurs (108) remplis d'un produit absorbant les neutrons sont placés dans les structures cellulaires (76a,76b).

18. Réacteur selon l'une quelconque des revendications 2 à 17, dans lequel le réceptacle (30) comprend une bride supérieure (86) par laquelle il repose sur des butées (98) liées à la cuve (18).

19. Réacteur selon l'une quelconque des revendications 2 à 17, dans lequel le réceptacle (30) comprend des renforts rayonnants (94), munis de perforations (100), par lesquels il repose dans le fond de la cuve (18).

20. Réacteur selon l'une quelconque des revendications 2 à 19, dans lequel un collecteur annulaire (62) est monté dans la cuve (18), à un niveau situé entre le coeur (20) et le réceptacle (30), au-dessus d'un bord supérieur de la paroi de ce dernier, en ménageant un jeu (64) entre ce collecteur et la paroi de la cuve (18), une face supérieure du collecteur étant en forme de trémie.

21. Réacteur selon la revendication 20, dans lequel une plaque perforée (66) bombée vers le bas est fixée au collecteur (62), au-dessus du réceptacle (30).

22. Réacteur selon l'une quelconque des revendications 20 à 21, dans lequel le collecteur (62) repose sur le bord supérieur du réceptacle (30), par l'intermédiaire d'une structure d'entretoisement (70).

23. Réacteur selon l'une quelconque des revendications 2 à 14, dans lequel le deuxième réservoir (40) est également relié à la cuve (18) par une troisième conduite (46) à écoulement gravitaire, contrôlée par une troisième vanne (48) normalement fermée.

24. Réacteur selon la revendication 23, dans lequel la troisième conduite (46) débouche dans la cuve (18) à un niveau voisin du niveau supérieur du coeur (20).

25. Réacteur selon l'une quelconque des revendications 23 et 24, dans lequel le deuxième réservoir (40) contient un volume d'eau apte à remplir la cuve (18) et le puits de cuve (14) au moins jusqu'au niveau auquel les première et troisième conduites (36, 46) débouchent dans la cuve (18).

26. Réacteur selon l'une quelconque des revendications précédentes, dans lequel le fond du premier réservoir (34) est à un niveau supérieur à celui des tubulures d'entrée d'eau primaire dans la cuve (18), la première conduite débouchant dans celle-ci à un niveau légèrement inférieur à celui desdites tubulures, de façon à assurer un écoulement gravitaire de l'eau contenue dans le premier réservoir (34), lors de l'ouverture de la première vanne (38).

27. Réacteur selon la revendication 26, dans lequel le premier réservoir (34) contient un volume d'eau apte à remplir la cuve (18) sensiblement jusqu'à un niveau supérieur du coeur (20).

28. Réacteur selon l'une quelconque des revendications précédentes, dans lequel le deuxième réservoir (40) est situé à un niveau inférieur à celui du premier réservoir (34).

29. Réacteur selon l'une quelconque des revendications précédentes, dans lequel l'eau de refroidissement est de l'eau traitée par des additifs inhibiteurs d'explosion de vapeur, au moins dans le premier réservoir (34).

30. Réacteur selon l'une quelconque des revendications précédentes, dans lequel des moyens de drainage sont prévus pour réalimenter les premier et deuxième réservoirs (34,40) en eau de refroidissement résultant d'une condensation de vapeur dans l'enceinte de confinement (10).

31. Réacteur selon la revendication 30, dans lequel des moyens d'échange thermique (58) sont prévus entre une source froide extérieure et la vapeur contenue dans l'enceinte de confinement (10).

32. Réacteur selon l'une quelconque des revendications précédentes, dans lequel des moyens de refroidissement (60) de l'eau de refroidissement sont prévus au moins dans le deuxième réservoir (40).
